# EUROPEAN PATENT SPECIFICATION

(11) **EP 2 653 518 B1**
(45) Date of publication and mention of the grant of the patent: **18.05.2016**
(21) Application number: 10860691.4
(22) Date of filing: 14.12.2010
(51) Int. Cl.: C09K 11/02, C09K 11/77

(54) **HALO-SILICATE LUMINESCENT MATERIALS AND PREPARATION METHODS THEREOF**
LUMINESZENTE HALOSILICATMATERIALIEN UND HERSTELLUNGSVERFAHREN DAFÜR
MATIÈRES FLUORESCENTES DE SILICATE HALOGÉNÉES ET PROCÉDÉS DE PRÉPARATION DE CELLES-CI

(43) Date of publication of application: 23.10.2013
(73) Proprietor: Ocean's King Lighting Science&Technology Co., Ltd., Guangdong 518054 (CN)
(72) Inventor: ZHOU, Mingjie, Shenzhen Guangdong 518054 (CN); WANG, Rong, Shenzhen Guangdong 518054 (CN); MA, Wenbo, Shenzhen Guangdong 518054 (CN)
(74) Representative: Johnson, Richard Alan
(86) International application number: PCT/CN2010/079752
(87) International publication number: WO 2012/079221

(56) References cited:
- CN-A- 101 760 195
- US-A1- 2006 028 122
- US-A1- 2007 210 282
- US-A1- 2008 017 831
- US-A1- 2009 022 766
- PARK K ET AL: "White-light generation through Ce<3+>/Mn<2+>-codoped and Eu<2+>-doped Ba1.2Ca0.8SiO4 T-phase phosphors", JOURNAL OF LUMINESCENCE, ELSEVIER BV NORTH-HOLLAND, NL, vol. 130, no. 12, 1 December 2010 (2010-12-01), pages 2442-2445, XP027407568, ISSN: 0022-2313 [retrieved on 2010-08-07]
- CHOWDHURY SANCHARI ET AL: "Silver-copper alloy nanoparticles for metal enhanced luminescence", APPLIED PHYSICS LETTERS, AMERICAN INSTITUTE OF PHYSICS, US, vol. 95, no. 13, 2 October 2009 (2009-10-02), pages 131115-131115, XP012125828, ISSN: 0003-6951, DOI: 10.1063/1.3242007
- WANG ET AL: "Enhanced luminescence from europium complex owing to surface plasmon resonance of silver nanoparticles", MATERIALS LETTERS, NORTH HOLLAND PUBLISHING COMPANY. AMSTERDAM, NL, vol. 62, no. 12-13, 26 October 2007 (2007-10-26), pages 1937-1940, XP022489552, ISSN: 0167-577X, DOI: 10.1016/J.MATLET.2007.10.045
- MIN Y L ET AL: "Au@Y2O3:Eu<3+> rare earth oxide hollow sub-microspheres with encapsulated gold nanoparticles and their optical properties", SOLID STATE SCIENCES, ELSEVIER, PARIS, FR, vol. 11, no. 1, 1 January 2009 (2009-01-01), pages 96-101, XP025840977, ISSN: 1293-2558, DOI: 10.1016/J.SOLIDSTATESCIENCES.2008.04.021 [retrieved on 2008-05-01]
- Chris D Geddes ET AL: "Metal-Enhanced Fluorescence" In: "Metal-Enhanced Fluorescence", 24 May 2010 (2010-05-24), John Wiley & Sons, Inc., Hoboken, NJ, USA, XP055139673, ISBN: 978-0-47-022838-8 vol. 12 * the whole document *

## Description

### FIELD OF THE INVENTION

The present invention relates to luminescent materials, more particularly, relates to silicate luminescent materials doped with metal nano-particles. The present invention also relates to a preparation method of silicate luminescent materials.

### BACKGROUND OF THE INVENTION

White light LED (light emitting diodes) have attracted an ever-widening attention due to advantages of high efficiency, long lifetime, small size, quick response, no pollution, and energy-saving. At present, one of the primary ways to achieve white light is to combine blue GaN chips with yellow YAG:Ce fluorescent powders. Such method has shortcoming of low color rendering index. However, the main trend and efforts have been directed toward combining near-ultraviolet LED chips and red, green, blue trichromatic powders to produce white light LED, which has high luminous efficiency, tunable color temperature, and high color rendering index. Consequently, LED trichromatic powders that can be efficiently excited by near-ultraviolet are currently studied widely. Therein, luminescent materials which take silicate systems as substrate have raised public concerns due to their features of wide source of raw materials, low-cost, good processing adaptability, moderate synthesis temperature and excellent stability.

Thomas synthesized alkaline-earth metals orthosilicate powders activated by bivalent europium ions. They are a kind of great green powders, compared to YAG fluorescent powders; they have broader excitation spectrum range, better color-purity. Nevertheless, such existing fluorescent powders have problems of low luminous efficiency, bad color rendering, etc. Park et al., Journal of luminescence, Vol. 130 (12), 2010, 2442-2445 describes hexagonal Ba_{1.20}Ca_{0.8-2*x*-*y*}SiO₄:xCe³⁺,*x*Li⁺,*y*Mn²⁺ phosphors; Chowdhury et al, Applied Physics Letters 95, 2009, 131115 describes metal enhanced luminescence in Ag-Cu alloy nanoparticles; US 2009/0022766 A1 describes nanoparticles coated with an excitable radiative molecule; Wang et al, Materials Letters 62, 2007, 1937-1940 describes the effect of Ag nanoparticles on the luminescent properties of europium EDTA complex; Min et al., Solid State Sciience 11, 2009, 96-101 describes a method of synthesizing Au@Y₂O₃:Eu³⁺ hollow sub-microspheres; US 2008/0017831 A1 describes a europium-activated alkaline earth orthosilicate luminescent material; US 2009/028122 A1 describes phosphor systems with the formula A₂SiO₄:Eu²⁺D where A is a divalent metal selected from Sr, Ca, Ba, Mg, Zn and Cd and D is a dopant selected from F, Cl, Br, I, P, S and N; US 2007/210282 A1 describes a phosphorescent compound with a M₂SiO₄ matrix doped with europium and at least one other lanthanide, where M is an alkaline earth metal; and Geddes et al., Journal of Fluorescence, 12, 2002, 121-129 describes metal enhanced fluorescence.

### SUMMARY OF THE INVENTION

Solving the above problems, the present invention provides silicate luminescent materials doped with metal nano-particles which is of low cost and high luminous efficiency, they are represented by general formula of (Ba_{1-y}A_{y})₂₋ₓ SiO₄:Euₓ,D_{z}@ Mn; wherein, A is one or two of Sr, Ca, Mg and Zn, D is any one of F and Cl, M is at least one metal nano-particles of Ag, Au, Pt, Pd and Cu; @ is coating , M nano-particles is a core; (Ba_{1-y} A_{y})₂₋ₓ SiO₄:Euₓ,D_{z} fluorescent powders are shell; x is in the range of 0.001 <x ≤0.15, y is in the range of 0<y≤0.5, z is in the range of 0≤z≤0.5, n is molar ratio of M nano-particles to Si in fluorescent powders, n is in the range of 0<n≤1×10⁻²; preferably, x is in the range of 0.005≤x≤0.10; y is in the range of 0.05≤y≤0.2; z is in the range of 0.01≤z≤0.2; n is in the range of 1×10⁻⁴≤n≤5×10⁻³.

The other purpose of the present invention is to provide a preparation method of silicate luminescent materials, comprising:
step S1: adding surface treating agent into M nano-particles collosol, then successively adding ethanol, water, ammonium water and tetra ethoxy silane (where the volume ratio of ethanol, water, ammonium water and tetra ethoxy silane is in the range of 25:8:5:1 to 30:10:7:1), obtaining solution containing nano-sphere of M nano-particles coated in SiO₂; wherein, M is at least one nano-particles of Ag, Au, Pt, Pd and Cu;
step S2: regulating pH value of solution containing nano-sphere of M nano-particles coated in SiO₂ obtained from step S1 to 5, then adding nitrate solution of Ba, nitrate solution of A and nitrate solution of Eu separately, and adding aqueous nitrate solution of BaD₂ or nitrate solution of AD₂ according to the stoichiometric ratio of corresponding elements in (Ba_{1-y}A_{y})₂₋ₓ SiO₄: Euₓ, D_{z}, next, adding precipitator, after stirring and reacting for 1 to 8h, placing precipitates into oven for drying to obtain precursor; wherein, A is one or two of Sr, Ca, Mg and Zn, D is any one of F and Cl; x is in the range of 0.001 <x ≤0.15, y is in the range of 0<y≤0.5, z is in the range of 0≤z≤0.5, n is molar ratio of M nano-particles to Si in fluorescent powders, n is in the range of 0<n≤ 1× 10⁻²;
step S3: heat treating the precursor obtained from step S2 at 600°∼1000°C for 2∼10h, and carrying out reducing treatment at 1000°C∼1400°C for 1∼8h in reducing atmosphere, after that, cooling and grinding to obtain said silicate luminescent materials represented by the general formula of (Ba_{1-y}A_{y})₂₋ₓ SiO₄:Euₓ,D_{z}@ Mn; wherein, @ is coating, M nano-particles is a core; (Ba_{1-y}A_{y})₂₋ₓ SiO₄:Euₓ,D_{z} fluorescent powders are shell.

In the step S1 of the above preparation method, said surface treating agent is polyvinyl pyrrolidone, the mass concentration of said surface treating agent in M nano-particles collosol is in the range of 0.005g/mL to 0.1g/mL.

In the step S2 of the above preparation method, said precipitator is ammonium bicarbonate, the molar amount of said precipitator is 1.20 to 1.5 times as much as that of luminescent materials (Ba_{1-y}A_{y})₂₋ₓ SiO₄:Euₓ,D_{z}@ Mₙ, that is, the amount of precipitator is excess 20%∼50%.

In the step S3 of the above preparation method, said reducing atmosphere is at least one of mixed gases of N₂ and H₂ reducing atmosphere, CO reducing atmosphere and pure H₂ reducing atmosphere.

Compared with the prior art, the silicate luminescent materials of the present invention whose shell is formed by coating metal particles improve its internal quantum efficiency; its luminous intensity are increased by adding metal nano particles, in addition, the luminescent materials that exhibit spherical shape have excellent stability, controllable size and morphology, high stacking density, which is favorable for coating screen technique and display; besides, the preparation method of the present invention is simple, low demand in equipment, no pollution, easy to control, and suitable for industrial production.

### BRIEF DESCRIPTION OF THE DRAWINGS

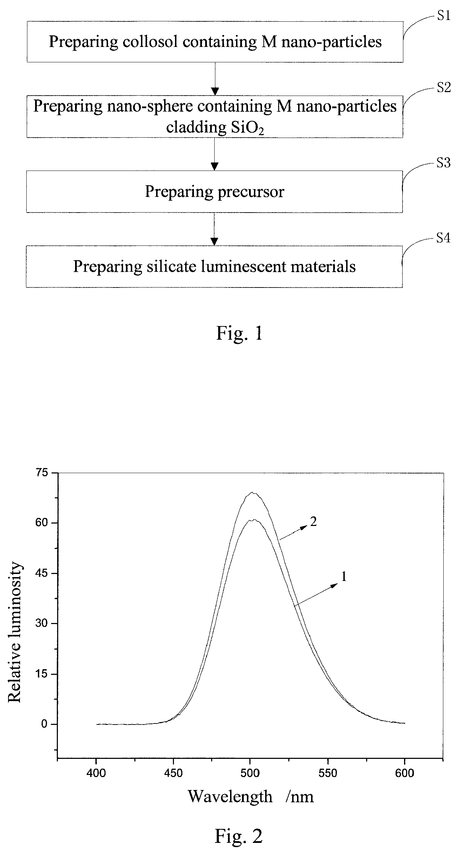

Fig. 1 is a flow chart of preparation method of silicate luminescent material of the present invention;
Fig. 2 is comparison between the spectrums of the luminescent materials prepared in Example 2 of the present invention which are excited at 460nm. Herein, curve 1 is luminescence spectrum of Ba1_{.99}SiO₄:Eu_{0.01} luminescent material without coating metal nano-particle Ag, curve 2 is luminescence spectrum of Ba_{1.99}SiO₄:Eu_{0.01}@Ag_{1.25×10}⁻³ luminescent material coating metal nano-particle Ag;

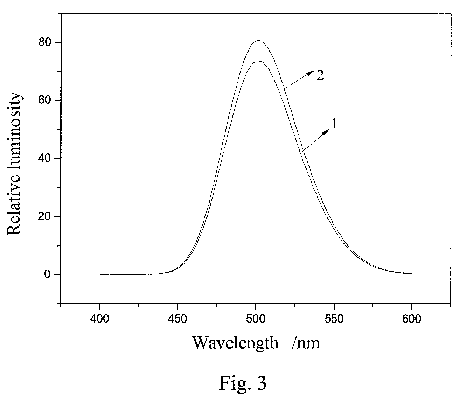

Fig. 3 is comparison between the spectrums of the luminescent materials prepared in Example 4 of the present invention which are excited at 460nm. Herein, curve 1 is luminescence spectrum of Ba_{1.99}SiO₄:Eu_{0.01}:F_{0.1} luminescent material without coating metal nano-particle Ag, curve 2 is luminescence spectrum of Ba_{1.99}SiO₄:Eu_{0.01}:F_{0.1}@Ag_{1.25×10}⁻³ luminescent material coating metal nano-particle Ag.

### DETAILED DESCRIPTION OF ILLUSTRATED EMBODIMENTS

Silicate luminescent materials provided in the present invention have general formula of (Ba_{1-y} A_{y})₂₋ₓ SiO₄:Euₓ,D_{z}@ Mn; wherein, A is one or two of Sr, Ca, Mg and Zn, D is any one of F and Cl, M is at least one metal nano-particles of Ag, Au, Pt, Pd and Cu; @ is coating, M nano-particles is a core; (Ba_{1-y} A_{y})₂₋ₓ SiO₄:Euₓ,D_{z} fluorescent powders are shell; x is in the range of 0.001 <x ≤0.15, y is in the range of 0<y≤0.5, z is in the range of 0≤z≤0.5, n is molar ratio of M nano-particles to Si in fluorescent powders, n is in the range of 0<n≤1×10⁻²; preferably, x is in the range of 0.005≤x≤0.10; y is in the range of 0.05≤y≤0.2; z is in the range of 0.01≤z≤0.2; n is in the range of 1 × 10⁻⁴≤n≤5 × 10⁻³.

M nano-particles collosol can be prepared before preparing the above silicate luminescent materials, the preparation method comprises:
1) weighing and dissolving compound used as source of M in mixed solvent of ethanol and water to prepare and dilute to achieve a solution containing M ions having molar concentration of 1×10⁻³mol/L~5×10⁻²mol/L; wherein M represents metal nano-particles selecting from one of Ag, Au, Pt, Pd and Cu, compounds used as source of M comprise silver nitrate, chloroauric acid, chloroplatinic acid, palladium and chloride;
2)while magnetically stirring, dissolving assistant agent in solution in the above step 1) to make the mass concentration of assistant agent in the final M nano-particles collosol be in the range of 1×10⁻⁴g/mL to 5×10⁻²g/mL; wherein, said assistant agent is at least one of polyvinyl pyrrolidone (PVP), sodium citrate, cetyl trimethyl ammonium bromide, sodium dodecyl sulfate and sodium dodecyl sulfonate;
3) weighing and dissolving reducing agent in mixed solvent of ethanol and water to prepare reducing solution having molar concentration of 1×10⁻⁴ mol/L~1mol/L; wherein, said reducing agent is at least one of hydrazine hydrate, ascorbic acid and sodium borohydride;
4) while magnetically stirring, according to the molar ratio of reducing agent to M ions 3.6:1∼18:1, adding the reducing solution obtained from the above step 3) into M nano-particles collosol solution containing assistant agent obtained from the above step 2), stirring, allowing the whole system to react for 10min~45min, then obtaining M nano-particles collosol for later use.

As shown in Fig. 1, the preparation method of the above silicate luminescent materials comprises:
Step S1: adding the obtained M nano-particles collosol into aqueous solution containing surface treating agent, then successively adding ethanol, water, ammonium water and tetra ethoxy silane (where the volume ratio of ethanol, water, ammonium water and tetra ethoxy silane is in the range of 25:8:5:1 to 30:10:7:1), obtaining solution containing nano-sphere of M nano-particles coated in SiO₂; wherein, M is at least one nano-particles of Ag, Au, Pt, Pd and Cu;
step S2: regulating pH value of solution containing nano-sphere of M nano-particles coated in SiO₂ obtained from step S1 to 5, then adding nitrate solution of Ba, nitrate solution of A and nitrate solution of Eu separately, and adding aqueous nitrate solutios of BaD₂ or nitrate solution of AD₂ according to the stoichiometric ratio of corresponding elements in (Ba_{1-y} A_{y})₂₋ₓ SiO₄: Euₓ, D_{z}, next, adding precipitator, after stirring and reacting for 1 to 8h, placing precipitates into oven for drying to obtain precursor; wherein, A is one or two of Sr, Ca, Mg and Zn, D is any one of F and Cl; x is in the range of 0.001 <x ≤0.15, y is in the range of 0<y≤0.5, z is in the range of 0≤z≤0.5, n is molar ratio of M nano-particles to Si in fluorescent powders, n is in the range of 0<n≤ 1× 10⁻²;
step S3: placing the precursor obtained from step S2 into muffle furnace and heat treating at 600°∼1000°C for 2∼10h, and then carrying out reducing treatment in reducing atmosphere at 1000°C∼1400°C for 1∼8h, after that, cooling and grinding to obtain said silicate luminescent materials represented by the general formula of (Ba_{1-y} A_{y})₂₋ₓ SiO₄:Euₓ,D_{z}@ Mn; wherein, @ is coating, M nano-particles is a core ; (Ba_{1-y} A_{y})₂₋ₓ SiO₄:Euₓ,D_{z} fluorescent powders are shell.

In the step S1 of the above preparation method, said surface treating agent is polyvinyl pyrrolidone, the mass concentration of said surface treating agent in M nano-particles collosol is in the range of 0.005g/mL to 0.1g/mL.

In the step S2 of the above preparation method, said precipitator is ammonium bicarbonate, the molar amount of said precipitator is 1.20 to 1.5 times as much as that of luminescent materials (Ba_{1-y} A_{y})₂₋ₓ SiO₄:Euₓ,D_{z}@ Mₙ, that is, the amount of precipitator is preferably excess 20%∼50%, thus ensuring complete precipitation. In this step, white precipitates will be produced after adding ammonium bicarbonate, and then the reaction is conducted while stirring for a certain time, the precipitates are placed into oven for drying after the reaction to obtain precursor.

In the step S3 of the above preparation method, said reducing atmosphere is at least one of mixed gases of N₂ and H₂ reducing atmosphere, CO reducing atmosphere and pure H₂ reducing atmosphere.

The foregoing silicate luminescent materials whose shell is formed by coating metal particles improve its internal quantum efficiency; its luminous intensity are increased by adding metal nano particles, in addition, the luminescent materials that exhibit spherical shape have excellent stability, controllable size and morphology, high stacking density, which is favorable for coating screen technique and display.

The silicate luminescent materials doped with metal nano-particles of the present invention having advantages of excellent stability, better luminescence property can be widely used in the fields of lighting, display and others.

Further description of the present invention will be illustrated, which combined with preferred embodiments in the drawings.

### Example 1

### Preparation of silicate luminescent material (Ba_{0.9}Sr_{0.1})_{1.85}SiO₄: Eu_{0.15}, Cl_{0.20} @Pt 1×10⁻² doped with platinum (Pt) nano-particles

At room temperature, weighing and dissolving 0.30 grams (g) of polyvinyl pyrrolidone (PVP) in 4 milliliters (mL) of deionized water, dissolving, then adding 4mL of 1×10⁻²mol/L platinum metal nano-particles, stirring for 18 hours (h), then adding successively 25mL of absolute ethanol, 5mL of ammonium water, 1.0mL of tetra ethoxy silane while stirring; reacting for 6h, after that, regulating pH of the solution to 5, then adding 21mL of 0.3mol/L aqueous solution of Ba(NO₃)₂, 1.5mL of 0.5mol/L aqueous solution of Sr(NO₃)₂, 3mL of 0.2mol/L aqueous solution of Eu(NO₃)₃, 2mL of 0.2mol/L aqueous solution of BaCl₂, stirring thoroughly, then dripping slowly 20mL of 0.5mol/L NH₄HCO₃, stirring and reacting for 5h, then placing precipitates into oven for drying, treating with heat at 600°C for 10h, placing into agate mortar and grinding thoroughly to mix well, then transferring powders to corundum crucible, sintering in reducing atmosphere of CO at 1300°C for 1h for reduction, cooling to room temperature and (Ba_{0.9}Sr_{0.1})_{1.85}SiO₄: Eu_{0.15}, Cl_{0.20} @Pt_{1×10}⁻² luminescent material doped with Pt nano-particles is obtained.

### Example 2

### Preparation of silicate luminescent material Ba_{1.99}SiO₄:Eu_{0.01}@Ag_{1.25×10}⁻³ doped with silver (Ag) nano-particles

At room temperature, weighing and dissolving 0.1g of polyvinyl pyrrolidone in 5mL of deionized water, dissolving, then adding 5mL of 1×10⁻³mol/L silver metal nano-particles, stirring for 12h, then adding successively 25mL of absolute ethanol, 6mL of ammonium water, 1.0mL of tetra ethoxy silane while stirring; reacting for 3h, after that, regulating pH of the solution to 5, then adding 26.7mL of 0.3mol/L aqueous solution of Ba(NO₃)₂, 0.4mL of 1.1mol/L aqueous solution of Eu(NO₃)₃, stirring thoroughly, then dripping slowly 10mL of 1mol/L NH₄HCO₃, stirring and reacting for 3h, then placing precipitates into oven for drying, treating with heat at 800°C for 4h, placing into agate mortar and grinding thoroughly to mix well, then transferring powders to corundum crucible, sintering in tube furnace in weak reducing atmosphere of 95%N₂ plus 5% H₂ at 1200°C for 4h for reduction, cooling to room temperature and Ba_{1.99}SiO₄:Eu_{0.01}@Ag_{1.25×10}⁻³ luminescent material doped with Ag nano-particles is obtained.

As shown in Fig. 2, the comparison of spectrums of the luminescent materials Bai_{1.99}SiO₄:Eu_{0.01}@Ag_{1.25×10}⁻³ coating metal nano-particles Ag prepared in the present embodiment with luminescent materials Ba_{1.99}SiO₄:Eu_{0.01} without coating metal nano-particles excited at 460nm, it can be seen from the emission peak appears at 505nm that luminous intensity of the luminescent materials coating metal nano-particles was increased by 15% compared to that of the samples without coating metal nano-particles at 505nm. The luminescent materials of the present embodiment had excellent stability, good color-purity and high luminous efficiency.

### Example 3

### Preparation of silicate luminescent material (Ba_{0.5}Ca_{0.5})_{1.999}SiO₄: Eu_{0.001}, F_{0.5}@Au_{1×10}⁻⁴ doped with Au nano-particles

At room temperature, weighing and dissolving 0.15g of polyvinyl pyrrolidone in 4mL of deionized water, dissolving, then adding 6mL of 1×10⁻⁴mol/L Au metal nano-particles, stirring for 12h, then adding successively 35mL of absolute ethanol, 10mL of ammonium water, 1.5mL of tetra ethoxy silane while stirring; reacting for 4h, after that, regulating pH of the solution to 5, then adding 6mL of 1mol/L solution of Ca(NO₃)₂, 20mL of 0.3mol/L solution of Ba(NO₃)₂, 6mL of 0.01mol/L solution of Eu(NO₃)₃, 3mL of 0.5mol/L solution of BaF₂, stirring thoroughly, then dripping slowly 30mL of 0.5mol/L NH₄HCO₃, stirring and reacting for 2h, then placing precipitates into oven for drying, treating with heat at 1000°C for 2h, placing into agate mortar and grinding thoroughly to mix well, then transferring powders to corundum crucible, sintering in tube furnace in reducing atmosphere of H₂ at 1300°C for 8h for reduction, cooling to room temperature and (Ba_{0.5}Ca_{0.5})_{1.999}SiO₄: Eu_{0.001}, F_{0.5}@Au_{1×10}⁻⁴ luminescent material doped with Au nano-particles is obtained.

### Example 4

### Preparation of silicate luminescent material Ba_{1.99}SiO₄:Eu_{0.1}:F_{0.1}@Ag_{1.25×10}⁻³ doped with Ag nano-particles

At room temperature, weighing and dissolving 0.10g of polyvinyl pyrrolidone in 5mL of deionized water, dissolving, then adding 5mL of 1×10⁻³mol/L Ag metal nano-particles, stirring for 12h, then adding successively 25mL of absolute ethanol, 6mL of ammonium water, 1.0mL of tetra ethoxy silane while stirring; reacting for 3h, after that, regulating pH of the solution to 5, then adding 26mL of 0.3mol/L solution of Ba(NO₃)₂, 0.4mL of 0.1mol/L solution of Eu(NO₃)₃, 2mL of 0.1mol/L solution of BaF₂, stirring thoroughly, then dripping slowly 10mL of 1mol/L NH₄HCO₃, stirring and reacting for 3h, then placing precipitates into oven for drying, treating with heat at 800°C for 2h, placing into agate mortar and grinding thoroughly to mix well, then transferring powders to corundum crucible, sintering in tube furnace in weak reducing atmosphere of 95%N₂ plus 5%H₂ at 1200°C for 4h for reduction, cooling to room temperature and Ba_{1.99}SiO₄:Eu_{0.01}F_{0.1}@Ag_{1.25×10}⁻³ luminescent material doped with Ag nano-particles is obtained.

As shown in Fig. 3, the comparison of spectrums of the luminescent materials Ba_{1.99}SiO₄:Eu_{0.1}:F_{0.1}@Ag_{1.25×10}⁻³ coating metal nano-particles Ag prepared in the present embodiment with luminescent materials Ba_{1.99}SiO₄:Eu_{0.01}F_{0.1} without coating metal nano-particles excited at 460nm, it can be seen from the emission peak appears at 505nm that luminous intensity of the luminescent materials coating metal nano-particles was increased by 12% compared to that of the samples without coating metal nano-particles at 505nm. The luminescent materials of the present embodiment had excellent stability, good color-purity and high luminous efficiency.

### Example 5

### Preparation of silicate luminescent material (Ba_{0.8}Mg_{0.2})_{1.95}SiO₄: Eu_{0.05}@Ag_{5×10}⁻³ doped with Ag nano-particles

At room temperature, weighing and dissolving 0.08g of polyvinyl pyrrolidone in 8mL of deionized water, dissolving, then adding 2mL of 1×10⁻²mol/L Ag metal nano-particles, stirring for 18h, then adding successively 20mL of absolute ethanol, 4mL of ammonium water, 1.0mL of tetra ethoxy silane while stirring; reacting for 6h, after that, regulating pH of the solution to 5, then adding 20.8mL of 0.3mol/L solution of Ba(NO₃)₂, 5.2mL of 0.3mol/L solution of Mg(NO₃)₂, 2mL of 0.1mol/L solution of Eu(NO₃)₃, stirring thoroughly, then dripping slowly 12mL of 1mol/L NH₄HCO₃, stirring and reacting for 8h, then placing precipitates into oven for drying, treating with heat at 900°C for 5h, placing into agate mortar and grinding thoroughly to mix well, then transferring powders to corundum crucible, sintering in tube furnace in weak reducing atmosphere of 95%N₂ plus 5%H₂ at 1150°C for 6h for reduction, cooling to room temperature and (Ba_{0.8}Mg_{0.2})_{1.95}SiO₄: Eu_{0.05}@Ag_{5×10}⁻³ luminescent material doped with Ag nano-particles is obtained.

### Example 6

### Preparation of silicate luminescent material (Ba_{0.7}Sr_{0.2}Mg_{0.1})_{1.9}SiO₄: Eu_{0.1},Cl_{0.01}i@Cu_{5×10}-4 doped with Cu nano-particles

At room temperature, weighing and dissolving 0.18g of polyvinyl pyrrolidone in 8mL of deionized water, dissolving, then adding 2mL of 1×10⁻³mol/L Cu metal nano-particles, stirring for 24h, then adding successively 30mL of absolute ethanol, 8mL of ammonium water, 1.2mL of tetra ethoxy silane while stirring; reacting for 2h, after that, regulating pH of the solution to 5, then adding 6mL of 0.3mol/L solution of Sr(NO₃)₂, 21.3mL of 0.3mol/L solution of Ba(NO₃)₂, 4.6mL of 0.2mol/L solution of Mg(NO₃)₂, 4.8mL of 0.1mol/L solution of Eu(NO₃)₃, 4.8mL of 0.01mol/L solution of SrCl₂, stirring thoroughly, then dripping slowly 12mL of 1mol/L NH₄HCO₃, stirring and reacting for 5h, then placing precipitates into oven for drying, treating with heat at 700°C for 6h, placing into agate mortar and grinding thoroughly to mix well, then transferring powders to corundum crucible, sintering in tube furnace in reducing atmosphere of H₂ at 1350°C for 6h for reduction, cooling to room temperature and (Ba_{0.7}Sr_{0.2}Mg_{0.1})_{1.9}SiO₄: Eu_{0.1},Cl_{0.01}@Cu_{5×10}⁻⁴ luminescent material doped with Cu nano-particles is obtained.

### Example 7

### Preparation of silicate luminescent material (Ba_{0.95}Zn_{0.05})_{1.995}SiO₄: Eu_{0.005} @Pd_{3×10}⁻⁴ doped with Pd nano-particles

At room temperature, weighing and dissolving 0.5g of PVP in 10mL of deionized water, dissolving, then adding 4mL of 3×10⁻⁴mol/L Au metal nano-particles, stirring for 24h, then adding successively 28mL of absolute ethanol, 7mL of ammonium water, 1.0mL of tetra ethoxy silane while stirring; reacting for 4h, after that, regulating pH of the solution to 5, then adding 25.3mL of 0.3mol/L solution of Ba(NO₃)₂, 2mL of 0.2mol/L solution of Zn(NO₃)₂, 2mL of 0.01mol/L solution of Eu(NO₃)₃, stirring thoroughly, then dripping slowly 20mL of 0.5mol/L NH₄HCO₃, stirring and reacting for 1h, then placing precipitates into oven for drying, treating with heat at 600°C for 8h, placing into agate mortar and grinding thoroughly to mix well, then transferring powders to corundum crucible, sintering in tube furnace in weak reducing atmosphere of 95%N₂ plus 5%H₂ at 1400°C for 3h for reduction, cooling to room temperature and (Ba_{0.95}Zn_{0.05})_{1.995}SiO₄: Eu_{0.005} @Pd_{3×10}⁻⁴ luminescent material doped with Pd nano-particles is obtained.

### Example 8

### Preparation of silicate luminescent material Ba_{1.95}SiO₄:Eu_{0.05}@ (Ag_{0.5}/Au_{0.5}) _{2×10}⁻³ doped with (Ag/Au) nano-particles

At room temperature, weighing and dissolving 0.15g of PVP in 6mL of deionized water, dissolving, then adding 4mL of 2×10⁻³mol/L Ag_{0.5}/Au_{0.5} nano-particles, stirring for 15h, then adding successively 30mL of absolute ethanol, 7mL of ammonium water, 1.0mL of tetra ethoxy silane while stirring; reacting for 6h, after that, regulating pH of the solution to 5, then adding 26mL of 0.3mol/L solution of Ba(NO₃)₂, 2mL of 0.1mol/L solution of Eu(NO₃)₂, stirring thoroughly, then dripping slowly 25mL of 0.5mol/L NH₄HCO₃, stirring and reacting for 7h, then placing precipitates into oven for drying, treating with heat at 800°C for 5h, placing into agate mortar and grinding thoroughly to mix well, then transferring powders to corundum crucible, sintering in tube furnace in weak reducing atmosphere of 95%N₂ plus 5%H₂ at 1300°C for 2h for reduction, cooling to room temperature and Ba_{1.99}SiO₄:Eu_{0.01}@ (Ag_{0.5}/Au_{0.5}) _{2×10}⁻³ luminescent material doped with (Ag_{0.5}/Au_{0.5}) nano-particles is obtained.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Accordingly, the scope of the present invention is described by the appended claims and is supported by the foregoing description.

## Claims

1. Silicate luminescent materials represented by the general formula of (Ba_{1-y} A_{y})₂₋ₓ SiO₄:Euₓ,D_{z}@ Mn, wherein A is one or two of Sr, Ca, Mg and Zn, D is any one of F and Cl, M is at least one metal nano-particles of Ag, Au, Pt, Pd and Cu; @ is coating, M nano-particles is a core; (Ba_{1-y} A_{y})₂₋ₓ SiO₄:Euₓ,D_{z} fluorescent powders are shell; x is in the range of 0.001 <x ≤0.15, y is in the range of 0<y≤0.5, z is in the range of 0≤z≤0.5, n is molar ratio of M nano-particles to Si in fluorescent powders, n is in the range of 0<n≤1×10⁻².

2. Silicate luminescent materials according to claim 1, wherein x is in the range of 0.005≤x≤0.10; y is in the range of 0.05≤y≤0.2; z is in the range of 0.01≤z≤0.2; n is in the range of 1×10⁻⁴≤n≤5×10⁻³.

3. A preparation method of silicate luminescent materials, comprising:
step S1: adding surface treating agent into M nano-particles collosol, then successively adding ethanol, water, ammonium water and tetra ethoxy silane, obtaining solution containing nano-sphere of M nano-particles coated in SiO₂; wherein, M is at least one nano-particles of Ag, Au, Pt, Pd and Cu;
step S2: regulating pH value of solution containing nano-sphere of M nano-particles coated in SiO₂ obtained from step S1 to 5, then adding nitrate solutions of Ba, A and Eu separately, and adding aqueous nitrate solutions of BaD₂ or AD₂ according to the stoichiometric ratio of corresponding elements in (Ba_{1-y}A_{y})₂₋ₓ SiO₄: Euₓ, D_{z}, next, adding precipitator, after stirring and reacting for 1 to 8h, placing precipitates into oven for drying to obtain precursor; wherein, A is one or two of Sr, Ca, Mg and Zn, D is any one of F and Cl; x is in the range of 0.001<x ≤0.15, y is in the range of 0<y≤0.5, z is in the range of 0≤z≤0.5, n is molar ratio of M nano-particles to Si in fluorescent powders, n is in the range of 0<n≤1 × 10⁻²;
step S3: cooling and grinding the precursor obtained from step S2 after heat treatment and reducing treatment, obtainning said silicate luminescent materials represented by the general formula of (Ba_{1-y}A_{y})₂₋ₓ SiO₄:Euₓ,D_{z}@ Mn; wherein, @ is coating, M nano-particles is a core; (Ba_{1-y}A_{y})₂₋ₓ SiO₄:Euₓ,D_{z} fluorescent powders are shell.

4. The preparation method of silicate luminescent materials according to claim 3, wherein, in said step S1, said surface treating agent is polyvinyl pyrrolidone, the mass concentration of said surface treating agent in M nano-particles collosol is in the range of 0.005g/mL to 0.1g/mL.

5. The preparation method of silicate luminescent materials according to claim 3 or 4, wherein, in said step S1, the volume ratio of said ethanol, water, ammonium water and tetra ethoxy silane is in the range of 25:8:5:1 to 30:10:7:1.

6. The preparation method of silicate luminescent materials according to claim 3, wherein, in said step S2, said precipitator is ammonium bicarbonate, the molar amount of said precipitator is 1.20 to 1.5 times as much as that of luminescent materials (Ba_{1-y}A_{y})₂₋ₓ SiO₄:Euₓ,D_{z}@ Mn.

7. The preparation method of silicate luminescent materials according to claim 3 or 6, wherein, in said step S2, x is in the range of 0.005≤x≤0.10; y is in the range of 0.05≤y≤0.2; z is in the range of 0.01≤z≤0.2; n is in the range of 1×10⁻⁴ ≤n≤5×10⁻³.

8. The preparation method of silicate luminescent materials according to claim 3, wherein, in said step S3, said heat treatment includes: heat treatment carried out at 600°C to 1000°C for 2 to 10h.

9. The preparation method of silicate luminescent materials according to claim 3, wherein, in said step S3, said reducing treatment includes: reducing treatment carried out at 1000°C to 1400°C for 1 to 8h.

10. The preparation method of silicate luminescent materials according to claim 3 or 9, wherein, said reducing treatment is carried out in reducing atmosphere, said reducing atmosphere is at least one of mixed gases of N₂ and H₂ reducing atmosphere, CO reducing atmosphere, and pure H₂ reducing atmosphere.

## Patentansprüche

1. Lumineszierende Silicatmaterialien, die durch die allgemeine Formel (Ba_{1-y}A_{y})₂₋ₓSiO₄:Euₓ,D_{z}@Mₙ dargestellt sind, worin A eines oder zwei von Sr, Ca, Mg und Zn ist, D ein beliebiges von F und Cl ist, M zumindest ein Metall-Nanoteilchen von Ag, Au, Pt, Pd und Cu ist; @ Beschichtung ist, M-Nanoteilchen ein Kern sind; (Ba_{1-y}A_{y})₂₋ₓSiO₄:Euₓ,D_{z}-Fluoreszenzpulver eine Hülle sind; x im Bereich von 0,001<x≤0,15 liegt, y im Bereich von 0<y≤0,5 liegt, z im Bereich von 0<z≤0,5 liegt, n das Molverhältnis von M-Nanoteilchen zu Si in Fluoreszenzpulvern ist, n im Bereich von 0<n≤1x10⁻² liegt.

2. Lumineszierende Silicatmaterialien nach Anspruch 1, worin x im Bereich von 0,005≤x≤0,10 liegt; y im Bereich von 0,05≤y≤0,2 liegt; z im Bereich von 0,01≤z≤0,2 liegt; n im Bereich von 1x10⁻⁴≤n≤5x10⁻³ liegt.

3. Herstellungsverfahren für lumineszierende Silicatmaterialien, umfassend:
Schritt S1: Zusetzen eines Oberflächenbehandlungsmittels in M-Nanoteilchen-Collosol, dann sukzessives Zusetzen von Ethanol, Wasser, Ammoniakwasser und Tetraethoxysilan, Erhalten einer Lösung enthaltend ein Nanokügelchen von mit SiO₂ beschichteten M-Nanoteilchen; worin M zumindest ein Nanoteilchen von Ag, Au, Pt, Pd und Cu ist;
Schritt S2: Regulieren des pH-Werts der Lösung, die das Nanokügelchen von mit SiO₂ beschichteten M-Nanoteilchen enthält, die in Schritt S1 erhalten wurde, auf 5, dann getrenntes Zusetzen von Nitratlösungen von Ba, A und Eu und Zusetzen von wässrigen Nitratlösungen von BaD₂ oder AD₂ gemäß dem stöchiometrischen Verhältnis von entsprechenden Elementen in (Ba_{1-y}A_{y})₂₋ₓSiO₄:EUₓ,D_{z}, als Nächstes Zusetzen eines Ausfällungsmittels nach dem Rühren und Umsetzen 1 bis 8 Stunden lang, Platzieren der Niederschläge in einem Ofen zum Trocknen, um einen Vorläufer zu erhalten; worin A eines oder zwei von Sr, Ca, Mg und Zn ist, D ein beliebiges von F und Cl ist; x im Bereich von 0,001<x≤0,15 liegt, y im Bereich von 0<y≤0,5 liegt, z im Bereich von 0≤z≤0,5 liegt, n ein Molverhältnis von M-Nanoteilchen zu Si in Fluoreszenzpulvern ist, n im Bereich von 0<n≤1x10⁻² liegt;
Schritt S3: Abkühlen und Mahlen des in Schritt S2 erhaltenen Vorläufers nach Hitzebehandlung und Reduktionsbehandlung, Erhalten der lumineszierenden Silicatmaterialien, die durch die allgemeine Formel (Ba_{1-y}A_{y})₂₋ₓSiO₄:EUₓ,D_{z}@Mₙ dargestellt sind, worin @ Beschichtung ist, M-Nanoteilchen ein Kern sind; (Ba₁₋yA_{y})₂₋ₓSiO₄:Euₓ,D_{z}-Fluoreszenzpulver eine Hülle sind.

4. Herstellungsverfahren für lumineszierende Silicatmaterialien nach Anspruch 3, worin im Schritt S1 das Oberflächenbehandlungsmittel Polyvinylpyrrolidon ist und die Massenkonzentration des Oberflächenbehandlungsmittels in M-Nanoteilchen-Collosol im Bereich von 0,005 g/ml bis 0,1 g/ml liegt.

5. Herstellungsverfahren für lumineszierende Silicatmaterialien nach Anspruch 3 oder 4, worin im Schritt S1 das Volumsverhältnis von Ethanol, Wasser, Ammoniumwasser und Tetraethoxysilan im Bereich von 25:8:5:1 bis 30:10:7:1 liegt.

6. Herstellungsverfahren für lumineszierende Silicatmaterialien nach Anspruch 3, worin im Schritt S2 das Ausfällungsmittel Ammoniumbicarbonat ist, die Molmenge des Ausfällungsmittels 1,20- bis 1,5-mal so hoch wie jene des lumineszierenden Materials (Ba_{1-y}A_{y})₂₋ₓSiO₄:EUₓ,D_{z}@Mₙ ist.

7. Herstellungsverfahren für lumineszierende Silicatmaterialien nach Anspruch 3 oder 6, worin im Schritt S2 x im Bereich von 0,005≤x≤0,10 liegt; y im Bereich von 0,05≤y≤0,2 liegt; z im Bereich von 0,01≤z≤0,2 liegt; n im Bereich von 1x10⁻4≤n≤5x10⁻³ liegt.

8. Herstellungsverfahren für lumineszierende Silicatmaterialien nach Anspruch 3, worin im Schritt S3 die Hitzebehandlung Hitzebehandlung umfasst, die bei 600 °C bis 1000 °C 2 bis 10 Stunden lang durchgeführt wird.

9. Herstellungsverfahren für lumineszierende Silicatmaterialien nach Anspruch 3, worin im Schritt S3 die Reduktionsbehandlung Reduktionsbehandlung umfasst, die bei 1000 °C bis 1400 °C 1 bis 8 Stunden lang durchgeführt wird.

10. Herstellungsverfahren für lumineszierende Silicatmaterialien nach Anspruch 3 oder 9, worin die Reduktionsbehandlung in reduzierender Atmosphäre durchgeführt wird, wobei die reduzierende Atmosphäre zumindest eine reduzierende Atmosphäre aus Mischgasen von N₂ und H₂, CO-Reduktionsatmosphäre und reine H₂-Reduktionsatmosphäre ist.

## Revendications

1. Matières luminescentes de silicate représentées par la formule générale suivante : (Ba_{1-y}A_{y})₂₋ₓSiO₄:Euₓ,D_{z}@Mₙ, dans laquelle A est un ou deux parmi Sr, Ca, Mg et Zn, D est un quelconque parmi F et Cl, M est au moins des nanoparticules métalliques de Ag, Au, Pt, Pd et Cu ; @ est le revêtement, M nanoparticules sont un noyau ; des poudres fluorescentes de (Ba_{1-y}A_{y})₂₋ₓ SiO₄:Eux,D_{z} sont un enveloppe ; x est dans la plage de 0,001 < x ≤0,15, y est dans la plage de 0 < y ≤ 0,5, z est dans la plage de 0 ≤ z ≤ 0,5, n est le rapport molaire de M nanoparticules sur Si dans les poudres fluorescentes , n est dans la plage de 0 < n ≤ 1 x 10⁻².

2. Matières luminescentes de silicate selon la revendication 1, dans lesquelles x est dans la plage de 0,005≤ x ≤0,10 ; y est dans la plage de 0,05 ≤ y ≤0,2 ; z est dans la plage de 0,01 ≤ z ≤ 0,2 ; n est dans la plage de 1×10⁻⁴ ≤ n ≤ 5 × 10⁻³

3. Procédé de préparation de matières luminescentes de silicate, comprenant les étapes suivantes :
étape S1 : ajouter un agent de traitement de surface dans une solution colloïdale de M nanoparticules, puis ajouter successivement de l'éthanol, de l'eau, de l'eau d'ammonium et du tétraéthoxysilane , en obtenant une solution contenant des nano-sphères de M nanoparticules revêtues de SiO₂ ; où M est au moins des nanoparticules de Ag, Au, Pt, Pd et Cu ;
étape S2 : réguler la valeur du pH de la solution contenant des nano-sphères de M nanoparticules revêtues de SiO₂ obtenues à partir de l'étape S1 à 5, puis ajouter des solutions de nitrate de Ba, A et Eu séparément, et ajouter des solutions de nitrate aqueuses de BaD₂ ou AD₂ en fonction du rapport stoechiométrique d'éléments correspondants (Ba_{1-y}A_{y})₂₋ₓSiO₄ : Euₓ, D_{z}, et ensuite ajouter un précipitant, et après agitation et réaction pendant 1 à 8 heures, mettre en place les précipités dans le four pour séchage afin d'obtenir un précurseur ; où A est un ou deux parmi Sr, Ca, Mg et Zn, D est l'un quelconque de F et Cl ; x est dans la plage de 0,001 < x ≤ 0,15, y est dans la plage de 0 < y ≤ 0,5, z est dans la plage de 0 ≤ z ≤ 0,5, n est le rapport molaire de M nanoparticules de silicium dans les poudres fluorescentes, n est dans l'intervalle de 0 <n ≤ 1×10⁻² ;
étape S3 : refroidir et broyer le précurseur obtenu à l'étape S2, et après traitement thermique et un traitement de réduction, obtenir lesdites matières luminescentes de silicate représentées par la formule générale suivante : (Ba_{1-y}A_{y})₂₋ₓSiO₄:Euₓ,D_{z}@Mₙ ; dans laquelle, @ est le revêtement, M nanoparticules est un noyau ; des poudres fluorescentes de (Ba_{1-y}A_{y})₂₋ₓSiO₄:Euₓ,D_{z} sont une enveloppe.

4. Procédé de préparation de matières luminescentes de silicate selon la revendication 3, dans lequel, dans ladite étape S1, ledit agent de traitement est de la polyvinylpyrrolidone, la concentration en masse dudit agent de traitement de surface dans une solution colloïdale de M nanoparticules est dans la plage de 0,005 g/ml à 0,1 g/ml.

5. Procédé de préparation de matières luminescentes de silicate selon la revendication 3 ou 4, dans lequel, dans ladite étape S1, le rapport en volume de l'éthanol, de l'eau, de l'eau d'ammonium et du tétraéthoxysilane est dans la plage de 25:8:5:1 à 30:10:7:1.

6. Procédé de préparation de matières luminescentes de silicate selon la revendication 3, dans lequel, dans ladite étape S2, ledit précipitant est du bicarbonate d'ammonium, la quantité molaire dudit précipitant est de 1,20 à 1,5 fois celle des matières luminescentes de (Ba_{1-y}A_{y})₂₋ₓSiO₄:Eux, D_{z}@Mₙ.

7. Procédé de préparation de matières luminescentes de silicate selon la revendication 3 ou 6 , dans lequel, dans ladite étape S2, x est dans la plage de 0, 005 ≤ x ≤ 0,10 ; est dans la plage de 0,05 ≤ y ≤ 0,2 ; z est dans la plage de 0,01 ≤ z ≤ 0,2 ; et n est dans la plage de 1×10⁻⁴ ≤ n ≤ 5×10⁻³.

8. Procédé de préparation de matières luminescentes de silicate selon la revendication 3, dans lequel, dans ladite étape S3, ledit traitement thermique comprend: un traitement thermique effectué entre 600°C et 1000°C pendant 2 à 10 heures.

9. Procédé de préparation de matières luminescentes de silicate selon la revendication 3, dans lequel, dans ladite étape S3, ledit traitement de réduction comprend: la réduction de traitement effectué entre 1000°C et 1400°C pendant 1 à 8 heures.

10. Procédé de préparation de matières luminescentes de silicate selon la revendication 3 ou 9, dans lequel ledit traitement de réduction est effectué dans une atmosphère d réduction, ladite atmosphère réduction est au moins une parmi une atmosphère de réduction de mélanges gazeux de N₂ et H₂, une atmosphère de réduction de CO, et une atmosphère de réduction de H₂ pur.
